# EUROPEAN PATENT SPECIFICATION

(11) **EP 4 581 909 B1**
(45) Date of publication and mention of the grant of the patent: **07.10.2026**
(21) Application number: 23757305.0
(22) Date of filing: 22.08.2023
(51) Int. Cl.: H05B 47/11, H05B 47/17

(54) **LIGHTING SYSTEM WITH CONTROL UNIT AND METHOD FOR OPERATION OF LIGHTING SYSTEM WITH CONTROL UNIT**
BELEUCHTUNGSSYSTEM MIT STEUEREINHEIT UND VERFAHREN ZUM BETRIEB EINES BELEUCHTUNGSSYSTEMS MIT STEUEREINHEIT
SYSTÈME D'ÉCLAIRAGE DOTÉ D'UNE UNITÉ DE COMMANDE ET PROCÉDÉ DE FONCTIONNEMENT D'UN SYSTÈME D'ÉCLAIRAGE DOTÉ D'UNE UNITÉ DE COMMANDE

(30) Priority: 01.09.2022 EP 22193377
(43) Date of publication of application: 09.07.2025
(73) Proprietor: Signify Holding B.V., 5656 AE Eindhoven (NL)
(72) Inventor: EKKEL, Jan, 5656 AE Eindhoven (NL)
(74) Representative: Verweij, Petronella Daniëlle
(86) International application number: PCT/EP2023/073020
(87) International publication number: WO 2024/046815

(56) References cited:
- WO-A1-2011/160343
- CN-A- 109 246 915
- US-B1- 11 284 494

## Description

### FIELD OF THE INVENTION

The present invention generally relates to a lighting system. More specifically, the present invention is related to a lighting system comprising a control unit for operation by a user.

### BACKGROUND OF THE INVENTION

Lighting systems comprising one or more light sources controllable by a light control are ubiquitous in homes, offices, industry, etc. For example, the light control may be of a button type, or may comprise a plurality of buttons, for switching on/off the light, dim the light, etc.

A user may know by experience which button(s) of the light control to select to operate the light sources of the lighting system. However, with user-defined configurations of the buttons of the light control and/or multiple light controls per home or room, it may be challenging to operate the light control in a desired way. For example, persons (e.g. visitors) may have to proceed by trial-and-error (e.g. by pressing multiple buttons) before operating the light sources in a desired way via the light control.

Furthermore, it may be problematic to use the light control in case of darkness. For example, it may be difficult to identify the buttons on the light control in a dim or dark environment. Albeit some light controls in the prior art comprise lights with printed characters for a facilitated operation, the printed characters may be difficult to read if the environment is dim or light is insufficient. For example, light controls may be provided with numerical characters instead of 'on' of "off" switches, but these numerical characters may be hard to read in case of insufficient light in the environment. Solutions wherein buttons on the light control are lighted up only when being pressed by a user may not be convenient, as this inherently starts the light control operation.

The disadvantages described above for light controls in the prior art may cause an inconvenient operation for a user and/or prevent a user to quickly and conveniently provide a desired operation and/or setting of the light via the light control.

Document WO 2011/160343 Al discloses a lighting system according to the preamble of claim 1.

Hence, it is an object of the present invention to provide a lighting system which provides a facilitated and more convenient control by the user of the light source(s).

### SUMMARY OF THE INVENTION

It is of interest to overcome at least some of the deficiencies of current light controls as described above, and to provide a convenient operation and/or setting of the light via the light control for a user.

This and other objects are achieved by providing a lighting system, a method and a computer program product having the features in the independent claims. Preferred embodiments are defined in the dependent claims.

Hence, according to a first aspect of the present invention, there is provided a lighting system. The lighting system comprises at least one light source arranged to emit light, an input interface configured to determine the intensity of ambient light in an environment, and a control unit located in the environment, the control unit comprising a plurality of light control switches for operation by a user, wherein the control unit is operationally connected to the at least one light source. In case the input interface determines a level of the intensity of the ambient light being below a first light intensity level, the control unit is configured to operate in a first mode wherein each control switch of the plurality of control switches is configured to switch on at least one light source of the at least one light source upon operation of the control unit by the user. In case the input interface determines a level of the intensity of the ambient light being above a second light intensity level, the control unit is configured to operate in a second mode wherein each control switch of the plurality of control switches is associated with an individual control of at least one property of the emitted light.

According to a second aspect of the present invention, there is provided a method for operating a lighting system comprising at least one light source arranged to emit light, an input interface configured to determine the intensity of ambient light in an environment, and a control unit comprising a plurality of light control switches for operation by a user, wherein the control unit is operationally connected to the at least one light source. The method comprises the step of determining a level of the intensity of the ambient light. The method further comprises the step of determining if the determined level of the intensity of the ambient light is below a first light intensity level, and accordingly setting the control unit to operate in a first mode wherein each control switch of the plurality of control switches is configured to switch on at least one light source of the at least one light source upon operation of the control unit by the user. The method further comprises the step of determining if the determined level of the intensity of the emitted light is above a second light intensity level, and accordingly setting the control unit to operate in a second mode wherein each control switch of the plurality of control switches is associated with an individual control of at least one property of the emitted light.

According to a third aspect of the present invention, there is provided a computer program product for a computing device. The computer program product comprises computer program code to perform the method of the second aspect of the present invention when the computer program product is run on a processing unit of the computing device.

Thus, the present invention is based on the idea of a lighting system comprising a control unit comprising a plurality of light control switches, wherein the control unit determines or sets the functionality of the light control switches dependently on the determined level of the ambient light. In case the ambient light is determined to be below a first light intensity level (i.e. being relatively low), any of the light control switches is configured to switch on the light source(s) so that operating (tapping) any one of the light control switches by a user switches on the light source(s). In case the ambient light is determined to be above a second light intensity level (i.e. being relatively high), each control switch is associated with an individual control of at least one property of the emitted light, i.e. having individual (normal) operation purposes.

The present invention is advantageous in that the lighting systems conveniently adapts the functioning of the control unit dependently of the level of the ambient light. In case of a determination of a relatively low level of ambient light (e.g. the ambient light in the environment being relatively dark, the time of day, etc.), the control unit conveniently operates in a first mode wherein each (i.e. all) control switches are configured to switch on the light source(s) when operated by a user. Hence, a user may, e.g. in a relatively dark environment, at a specific time of day, etc., operate (press, tap, etc.) any of the control switches in order to turn on (switch on) the light source(s). It should be noted that with a user-defined configuration of control switches per control unit (and, possibly, multiple control units per home or room), finding the right button to switch on the light source(s) in a relatively dark environment can be challenging. Furthermore, visitors not used to the control unit switches and/or positions may have to press multiple control unit switches before they find the correct one. In contrast, the present invention overcomes this problem by its convenient and automatic change of control unit switch operation based on the determined ambient light level.

The lighting system comprises at least one light source arranged to emit light. Hence, the lighting system may comprise one or more light sources, e.g. comprising one of more light-emitting diodes, LEDs. The lighting system further comprises an input interface configured to determine the intensity of ambient light in an environment. By the terms "ambient light in an environment", it is here meant ambient light (i.e. artificial (from light source(s)) and/or natural light) in a room, office, etc., constituting the environment. By the term "input interface", it is hereby meant substantially any interface arranged or configured to determine the intensity of ambient light in an environment via received input(s). For example, the input(s) may comprise light intensity signal(s) of the ambient light in the environment, time data (e.g. the time of day), etc.

The lighting system further comprises a control unit located in the environment. By the term "control unit", it is hereby meant a light control (unit), a switch, or the like, which is arranged for operation by a user. The control unit comprises a plurality of light control switches for operation by a user, wherein the control unit is operationally connected to the at least one light source. By the term "light control switches", it is here meant a plurality of switches of the control unit that a user may operate (e.g. press, tap, turn, etc.) in order to change one or more properties of the light from the light source(s).

In case the input interface determines a level of the intensity of the ambient light being below a first light intensity level, the control unit is configured to operate in a first mode wherein each control switch of the plurality of control switches is configured to switch on at least one light source of the at least one light source upon operation of the control unit by the user. By the term "first light intensity level", it is here meant a predetermined (threshold) light intensity level. Hence, the input interface may determine a (relatively low) light intensity level of the ambient light in the environment, and accordingly, the control unit may operate in a first mode wherein each (i.e. all) control switches are configured to switch on the light source(s) when operated by a user.

In case the input interface determines a level of the intensity of the ambient light being above a second light intensity level, the control unit is configured to operate in a second mode wherein each control switch of the plurality of control switches is associated with an individual control of at least one property of the emitted light. By the term "at least one property of the light", it is hereby meant substantially any light property(ies), such as intensity, color (temperature), hue, etc. By the term "second light intensity level", it is here meant a predetermined (threshold) light intensity level. It should be noted that the first light intensity level may be different from the second light intensity level. In this case, the level of the intensity of the ambient light may be between the first light intensity level and the second intensity level. The control unit may hereby be configured to operate in the first mode in case (when) the level of the intensity of the ambient light falls below the first light intensity level, i.e. to switch to the first mode operation upon the level of the intensity of the ambient light falling below the first light intensity level. Analogously, the control unit may be configured to operate in the second mode in case (when) the level of the intensity of the ambient light exceeds (i.e. rises above) the second light intensity level, i.e. to switch to the second mode operation upon the level of the intensity of the ambient light rising above the second light intensity level. As an alternative to the first and second light intensity levels being different from each other, the first and second light intensity levels may be the same. Thus, in this case of the first and second light intensities being the same, there is a (single) level or threshold distinguishing (separating) the first mode and the second mode for the control unit's operation. In the second mode of the control unit, the control switches are configured to operate individually regarding property(ies) of the emitted light, i.e. according to a normal/intended operation of the control switches compared to the first mode of the control unit wherein all control switches are configured to switch on the light source(s) when operated by a user.

According to an embodiment of the present invention, the control unit may be configured to operate in the second mode after operation by the user of the control unit in the first mode. Hence, as soon as the control unit has operated in the first mode and a user has operated (used) the control unit (i.e. for switching on the light source(s)), the control unit may be configured to operate in the second mode in which the control switches are configured to operate individually regarding property(ies) of the emitted light, i.e. according to a normal/intended operation of the control switches. The present embodiment is advantageous in that a user may conveniently use the intended and individual purposes of the control switches in the second mode of the control unit after turning on the light source(s) via the control unit in the first mode.

According to an embodiment of the present invention, the input interface may be configured to determine the intensity of the ambient light based on a current light setting of the at least one light source. Hence, the input interface may receive the current light setting of the light source(s) as input for determining the ambient light intensity. The present embodiment is advantageous in that the input interface may easily and conveniently receive information (input) of the current light setting of the light source(s). Furthermore, as the current light setting of the light source(s) may, to a large extent, correspond to the (real) ambient light intensity, the present embodiment is advantageous in an efficient determination and/or estimation of the ambient light intensity, e.g. without the presence of (light) sensors.

According to an embodiment of the present invention, in the first mode, each control switch of the plurality of control switches may configured to switch on the at least one light source of the at least one light source according to at least one of a previous setting of the at least one light source, and a setting of the at least one light source based on the time of day, upon operation of the control unit by the user. Hence, in case the input interface determines a level of the intensity of the ambient light being below the first light intensity level, the control unit is configured to operate in the first mode wherein each control switch of the plurality of control switches is configured to switch on the light source(s) according to a previous setting of the light source(s) and/or a setting of the light source(s) based on the time of day, upon operation of the control unit by the user.

According to an embodiment of the present invention, the lighting system may comprise at least one sensor connected to the input interface and configured to generate a light intensity signal associated with the ambient light, wherein the input interface is configured to determine the intensity of the ambient light based on the light intensity signal received from the at least one sensor. The at least one sensor may, for example, be a light sensor configured to sense (measure) the ambient light, and accordingly generate a light intensity signal associated with the ambient light. The present embodiment is advantageous in that the lighting system may accurately determine the ambient light via the (light) sensor(s), which consequently leads to an improved operation of the control unit regarding the first and second modes thereof.

According to an embodiment of the present invention, the input interface is connected to the control unit and is configured to send information associated with the intensity of the ambient light to the control unit according to a first predetermined time interval setting. As the input interface is configured to send the information to the control unit according to a predetermined time interval setting, and thereby avoid e.g. exaggerated and/or superfluous reporting, the present embodiment is advantageous regarding energy efficiency.

According to an embodiment of the present invention, the input interface may be connected to the control unit and may be configured to send information associated with the intensity of the ambient light to the control unit upon request by the control unit. The present embodiment is advantageous in that the control unit may request the information at desired and/or optimized time(s) such that the control unit may enter into its first or second mode of operation in an even more accurate way. The present embodiment is further advantageous regarding energy efficiency, as it may be desired to avoid a (too frequent) reporting by the input interface to the control unit.

According to an embodiment of the present invention, the control unit may be configured to request the information based on at least one of a second predetermined time interval setting, the light intensity signal exceeding (i.e. being above or being below) a predetermined threshold, a time of day, and information associated with the intensity of the ambient light previously sent to the control unit. The present embodiment is advantageous regarding information reporting convenience, accuracy of the control unit with respect to its first and/or second operation mode(s) and/or energy efficiency. For example, regarding the request of the control unit of the information based on a time of day, it should be noted that in case of a knowledge of a relatively sharp change of ambient light level at one or more times (e.g. in the morning and/or in the evening), the control unit may be configured to request the information more frequently compared to other times (e.g. at the middle of the day). Furthermore, the control unit may, for example, assume that the ambient light may follow a pattern based on the information associated with the intensity of the ambient light previously sent to the control unit, and/or extrapolate the previously received information, resulting in an optimized request of information by the control unit. It should be noted that the present embodiment may be particularly advantageous in case no (light) sensor(s) is (are) provided in the lighting system or if the sensor(s) is (are) not available, e.g. due to network and/or battery issues.

According to an embodiment of the present invention, the at least one sensor may comprise at least one camera configured to register the intensity of the ambient light. The present embodiment is advantageous in that the camera(s) may accurately and conveniently register the ambient light upon which the control unit may operate.

According to an embodiment of the present invention, at least two of the control unit, the input interface and the at least one light source may be integrated in a single entity. Hence, any combination of the control unit, the input interface and the light source(s) may be arranged in the same entity or unit, which may lead to a more compact, functional and/or aesthetically attractive lighting system.

According to an embodiment of the present invention, the control unit may be configured to set the second light intensity level. Hence, the control unit may determine the second light intensity level the ambient light must exceed in order to enter the second mode. The present embodiment is advantageous in that the control unit may determine, adapt and/or set the second light intensity level in order to achieve an even more desired operation of the control unit of the lighting system.

According to an embodiment of the present invention, the input interface may be connected to the control unit, and wherein the control unit is configured to receive a plurality of levels of the intensity of the ambient light as a function of time from the input interface, and to set the second light intensity level based on the received plurality of levels of the intensity of the ambient light. The present embodiment is advantageous in that the control unit may benefit from information of the ambient light as a function of time, and determine, adapt and/or set the second light intensity level accordingly. For example, the control unit may extrapolate the information of the ambient light as a function of time and/or determine pattern(s) of the ambient light information. This may lead to an even more desired operation of the control unit of the lighting system.

According to an embodiment of the present invention, the control unit may be a multi-button switch, and wherein the plurality of light control switches may comprise an on/off control switch. Hence, the control unit may be a light control of the type comprising two or more buttons, wherein one of the buttons may be an on/off control switch.

It should be understood that the method of the second aspect of the present invention may have similar and/or identical embodiments and advantages as the above-mentioned lighting system.

Further objectives of, features of, and advantages with, the present invention will become apparent when studying the following detailed disclosure, the drawings and the appended claims. Those skilled in the art will realize that different features of the present invention can be combined to create embodiments other than those described in the following.

### BRIEF DESCRIPTION OF THE DRAWINGS

This and other aspects of the present invention will now be described in more detail, with reference to the appended drawings showing embodiment(s) of the invention.
Figs. 1a and 1b schematically show a lighting system according to exemplifying embodiments of the present invention, and
Fig. 2 schematically shows a method, according to the second aspect of the present invention, for operating a lighting system according to the first aspect of the present invention.

### DETAILED DESCRIPTION

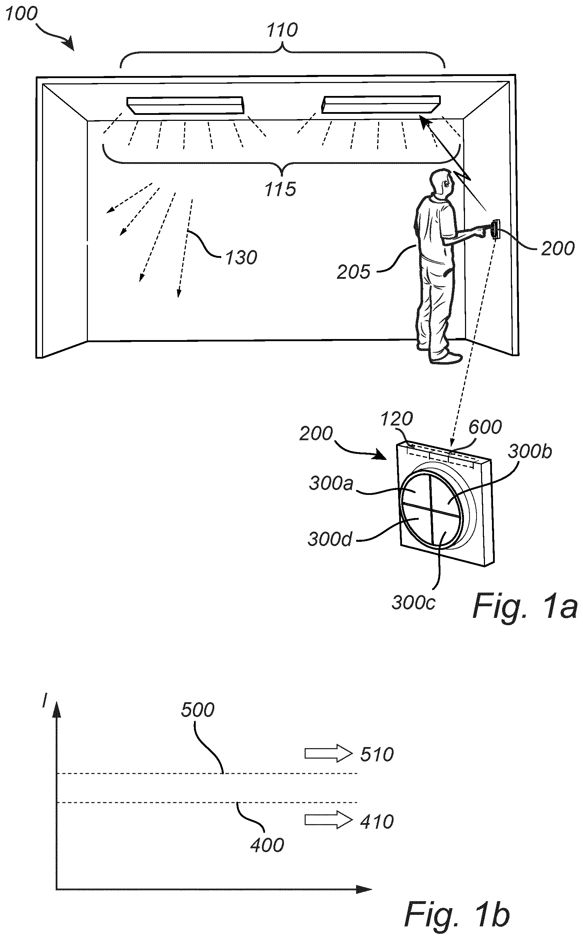

Figs. 1a and 1b show a lighting system 100 according to the first aspect of the present invention. The lighting system 100 may be provided in substantially any kind of environment, such as a home, office, etc. Here, the environment is exemplified as a room. The lighting system 100 comprises at least one light source 110 arranged to emit light 115. In Fig. 1a, the light sources 110 are, for example, arranged in the ceiling of the room.

The lighting system 100 further comprises a control unit 200 located in the environment. Here, the control unit 200 is exemplified as a light control, switch or button, which is round and has four light control switches 300a-d as sections of the control unit 200. However, it should be noted that the control unit 200 may have substantially any form (e.g. having a shape comprising a linear array of control switches). The control unit 200 is arranged for operation by a user 205, and is operationally connected to the light source(s) 110. The user 205 may operate (e.g. press, tap, turn, etc.) the light control switches 300a-d in order to change one or more properties of the emitted light 115 from the light source(s) 110. The control unit 200 may be mounted in a wall plate using a magnet. If correctly placed, a notch ensures the correct orientation of the light control switches 300a-d.

The lighting system 100 further comprises an input interface 120. The size and/or positioning of the input interface 120 is arbitrary and is indicated as an example. In Fig. 1a, the input interface 120 is shown as a part of the control unit 200, i.e. that the control unit 200 and the input interface 120 are integrated. It should be noted, however, that the input interface 120 may be arranged (physically) separate from the control unit 200. The input interface 120 may be substantially any interface arranged or configured to determine the intensity of ambient light 130 in the environment via received input(s). For example, the input(s) may comprise light intensity signal(s) of the ambient light 130 in the environment, time data (e.g. the time of day), etc. The ambient light 130 may comprise the emitted light 115 from the light source(s) 110, light emitted from one or more light sources which do not form part of the lighting system 100 and/or (natural) light, e.g. from one or more windows.

The input interface 120 may determine a level of the intensity of the ambient light 130. Fig. 1b schematically shows the intensity (y-axis, arbitrary units) of the ambient light 130. In case the input interface 120 determines a level of the intensity of the ambient light 130 being below a first light intensity level 400, the control unit 200 of the lighting system 100 is configured to operate in a first mode 410. In this first mode 410 of operation of the control unit 200, each control switch 300a-d of the plurality of control switches 300a-d is configured to switch on at least one light source of the light source(s) 110 upon operation of the control unit 200 by the user 205. The first light intensity level 400 in Fig. 1b represents a predetermined (threshold) light intensity level for the ambient light 130, below which the control unit 200 operates in a first mode wherein each (i.e. all) control switches 300a-d are configured to switch on the light source(s) 110 when operated by the user 205. Alternatively, in case the input interface 120 determines a level of the intensity of the ambient light 130 being above a second light intensity level 500, as indicated in Fig. 1b, the control unit 200 is configured to operate in a second mode 510 wherein each control switch of the plurality of control switches 300a-d is associated with an individual control of at least one property of the emitted light 115 from the light source(s) 110. Examples of property(ies) of the emitted light 115 may be intensity, color (temperature), hue, dimming, etc. The second light intensity level 500 represents a predetermined (threshold) light intensity level for the ambient light 130, above which the control switches 300a-d are configured to operate individually regarding property(ies) of the emitted light 115, i.e. according to a normal/intended operation of the control switches 300a-d compared to the first mode 410 of the control unit 120 wherein all control switches 300a-d are configured to switch on the light source(s) 110 when operated by the user 205. In Fig. 1b, the first light intensity level 400 is shown to be different from the second light intensity level 500, and if the input interface 120 determines that the level of the intensity of the ambient light 130 is between the first light intensity level 400 and the second intensity level 500, the control unit 120 is configured to trigger the operation in the first mode 410 in case (when) the level of the intensity of the ambient light 130 falls below the first light intensity level 400, and analogously, to trigger the operation in the second mode 510 in case (when) the level of the intensity of the ambient light 130 exceeds (i.e. rises above) the second light intensity level 500. Alternatively, it should be noted that that the first and second light intensity levels 400, 500 may be the same. Thus, in this exemplifying case, wherein the first and second light intensities 400, 500 are the same, there is a (single) level or threshold distinguishing (separating) the first mode and the second mode for the operation of the control unit 120. In other words, in case the input interface 120 determines a level of the intensity of the ambient light 130 being below the first light intensity level 400 (being the same as the second light intensity level 500), the control unit 120 is configured to operate in the first mode 410, whereas in case the input interface 120 determines a level of the intensity of the ambient light 130 being above the second light intensity level 500 (being the same as the first light intensity level 400), the control unit 120 is configured to operate in the second mode 510. According to an example, the control unit 120 may be configured to operate in the second mode 510 after operation by the user of the control unit 200 in the first mode 410. Furthermore, the input interface 120 may be configured to determine the intensity of the ambient light 130 based on a current light setting of the light source(s) 115.

In Fig. 1a, the lighting system 100 as exemplified further comprises a sensor 600. The sensor 600 is configured to generate a light intensity signal associated with the ambient light 130. The size and/or positioning of the input interface 120 is arbitrary and is indicated as an example. In Fig. 1a, the sensor 600 is shown as a part of the control unit 200, i.e. that the sensor 600 is embedded in the control unit 200, or alternatively phrased, that the control unit 200 and the sensor 600 are integrated. Hence, Fig. 1a shows the example of the integration of the control unit 200, the input interface 120 and the sensor 600. It should be noted, however, that the sensor 600 alternatively may be arranged (physically) separate from the control unit 200. The sensor 600 is connected (by wire or wireless) to the input interface 120. The sensor 600 is preferably placed anywhere in the environment (room) wherein the ambient light 130 is representative of the location of the control unit 200. Albeit a single sensor 600 is shown in Fig. 1a, the lighting system 100 may comprise a plurality of sensors 600 to register the ambient light 130. The input interface 120 may hereby be configured to determine the intensity of the ambient light 130 based on the light intensity signal received from the sensor(s) 600. In case the input interface 120 and the control unit 200 are integrated, the control unit 200 may obtain information associated with the intensity of the ambient light 130 via the input interface 120. In case the input interface 120 and the control unit 200 are (physically) separated, the input interface 120 may be connected to the control unit 200, and the input interface 120 may be configured to send information associated with the intensity of the ambient light 130 to the control unit 200. For example, the input interface 120 may be configured to send information associated with the intensity of the ambient light 130 to the control unit 200 according to a first predetermined time interval setting. Alternatively, the input interface 120 may be configured to send information associated with the intensity of the ambient light 130 to the control unit 200 upon request by the control unit 200. For example, the request by the control unit 200 may be based on a second predetermined time interval setting, the light intensity signal exceeding (i.e. being above or below) a predetermined threshold, a time of day, and/or information associated with the intensity of the ambient light 130 previously sent to the control unit 200.

The sensor 600 of the lighting system 100 as exemplified in Fig. 1a may furthermore comprise one or more cameras (not shown) configured to register the intensity of the ambient light 130.

According to an example, the input interface 120 may be connected to the control unit 200, and the control unit 200 may be configured to receive a plurality of levels of the intensity of the ambient light 130 as a function of time from the input interface 120, and to set the second light intensity level based on the received plurality of levels of the intensity of the ambient light 130.

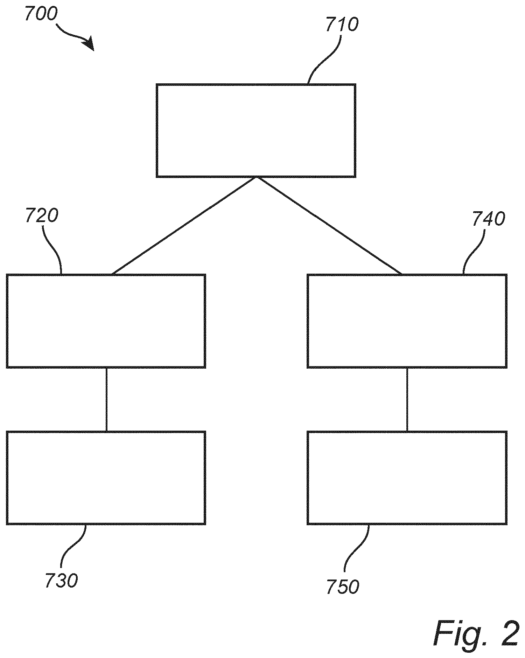

Fig. 2 schematically shows a method 700, according to the second aspect of the present invention, for operating a lighting system 100 according to the first aspect of the present invention and as exemplified in Figs. 1a and 1b. The method 700 comprises the step of determining 710 a level of the intensity of the ambient light. The method 700 further comprises the step of determining 720 if the determined level of the intensity of the ambient light is below a first light intensity level. If the level of the intensity of the ambient light is below the first light intensity level, the method 700 accordingly sets 730 the control unit to operate in a first mode wherein each control switch of the plurality of control switches is configured to switch on at least one light source of the at least one light source upon operation of the control unit by the user. The method 700 further comprises the step of determining 740 if the determined level of the intensity of the emitted light is above a second light intensity level. If the level of the intensity of the emitted light is above the second light intensity level, the method 700 accordingly sets 750 the control unit to operate in a second mode wherein each control switch of the plurality of control switches is associated with an individual control of at least one property of the emitted light.

The person skilled in the art realizes that the present invention by no means is limited to the preferred embodiments described above. On the contrary, many modifications and variations are possible within the scope of the appended claims. For example, the number, shape and/or position of the light sources 110, the interface input 120, sensor(s) 600, control unit 200, in Fig. 1a and/or the first and/or second light intensity level(s) 400, 500, may be different than those shown.

## Claims

1. A lighting system (100), comprising
at least one light source (110) arranged to emit light (115),
an input interface (120) configured to determine the intensity of ambient light (130) in an environment,
a control unit (200) located in the environment, the control unit comprising a plurality of light control switches (300a-d) for operation by a user (205), wherein the control unit is operationally connected to the at least one light source,
wherein, in case the input interface determines a level of the intensity of the ambient light being below a first light intensity level (400), the control unit is configured to operate in a first mode (410) wherein each control switch of the plurality of control switches is configured to switch on at least one light source of the at least one light source upon operation of the control unit by the user,
**characterized in that**
in case the input interface determines a level of the intensity of the ambient light being above a second light intensity level (500), the control unit is configured to operate in a second mode (510) wherein each control switch of the plurality of control switches is associated with an individual control of at least one property of the emitted light.

2. The lighting system according to claim 1, wherein the control unit is configured to operate in the second mode after operation by the user of the control unit in the first mode.

3. The lighting system according to claim 1 or 2, wherein the input interface is configured to determine the intensity of the ambient light based on a current light setting of the at least one light source.

4. The lighting system according to any one of the preceding claims, whereby in the first mode, each control switch of the plurality of control switches is configured to switch on the at least one light source of the at least one light source according to at least one of
a previous setting of the at least one light source, and
a setting of the at least one light source based on the time of day, upon operation of the control unit by the user.

5. The lighting system according to any one of the preceding claims, further comprising at least one sensor (600) connected to the input interface and configured to generate a light intensity signal associated with the ambient light, wherein the input interface is configured to determine the intensity of the ambient light based on the light intensity signal received from the at least one sensor.

6. The lighting system according to claim 5, wherein the input interface is connected to the control unit and is configured to send information associated with the intensity of the ambient light to the control unit according to a first predetermined time interval setting.

7. The lighting system according to claim 5, wherein the input interface is connected to the control unit and is configured to send information associated with the intensity of the ambient light to the control unit upon request by the control unit.

8. The lighting system according to claim 7, wherein the control unit is configured to request the information based on at least one of
a second predetermined time interval setting,
the light intensity signal exceeding a predetermined threshold,
a time of day, and
information associated with the intensity of the ambient light previously sent to the control unit.

9. The lighting system according to any one of claims 5-8, wherein the at least one sensor comprises at least one camera configured to register the intensity of the ambient light.

10. The lighting system according to any one of the preceding claims, wherein at least two of
the control unit,
the input interface, and
the at least one light source,
are integrated in a single entity.

11. The lighting system according to any one of the preceding claims, wherein the control unit is configured to set the second light intensity level.

12. The lighting system according to any one of the preceding claims, wherein the input interface is connected to the control unit, and wherein the control unit is configured to receive a plurality of levels of the intensity of the ambient light as a function of time from the input interface, and to set the second light intensity level based on the received plurality of levels of the intensity of the ambient light.

13. The lighting system according to any one of the preceding claims, wherein the control unit is a multi-button switch, and wherein the plurality of light control switches comprises an on/off control switch (300a).

14. A method (700) for operating a lighting system (100) comprising at least one light source (110) arranged to emit light (115), an input interface (120) configured to determine the intensity of ambient light in an environment, and a control unit (200) comprising a plurality of light control switches (300a-d) for operation by a user (205), wherein the control unit is operationally connected to the at least one light source, wherein the method comprises the steps of
determining (710) a level of the intensity of the ambient light,
determining (720) if the determined level of the intensity of the ambient light is below a first light intensity level (400), and accordingly setting (730) the control unit to operate in a first mode (410) wherein each control switch of the plurality of control switches is configured to switch on at least one light source of the at least one light source upon operation of the control unit by the user, **characterized by**
determining (740) if the determined level of the intensity of the ambient light is above a second light intensity level (500), and accordingly setting (750) the control unit to operate in a second mode (510) wherein each control switch of the plurality of control switches is associated with an individual control of at least one property of the emitted light.

15. A computer program product for a computing device, the computer program product comprising computer program code to perform the method of claim 14 when the computer program product is run on a processing unit of the computing device.

## Patentansprüche

1. Beleuchtungssystem (100), umfassend
- mindestens eine Lichtquelle (110), die angeordnet ist, um Licht (115) zu emittieren,
eine Eingangsschnittstelle (120), die konfiguriert ist, um die Intensität von Umgebungslicht (130) in einem Umfeld zu bestimmen,
eine Steuereinheit (200), die sich in dem Umfeld befindet, die Steuereinheit umfassend eine Vielzahl von Lichtsteuerschaltern (300a-d) für Betätigung durch einen Benutzer (205), wobei die Steuereinheit mit der mindestens einen Lichtquelle wirkverbunden ist,
wobei, für einen Fall, dass die Eingangsschnittstelle bestimmt, dass ein Niveau der Intensität des Umgebungslichts unter einem ersten Lichtintensitätsniveau (400) liegt, die Steuereinheit konfiguriert ist, um in einem ersten Modus (410) betrieben zu werden, wobei jeder Steuerschalter der Vielzahl von Steuerschaltern konfiguriert ist, um, bei Betätigung der Steuereinheit durch den Benutzer mindestens eine Lichtquelle der mindestens einen Lichtquelle einzuschalten,
**dadurch gekennzeichnet, dass,** für den Fall, dass die Eingangsschnittstelle bestimmt, dass ein Niveau der Intensität des Umgebungslichts über einem zweiten Lichtintensitätsniveau (500) liegt, die Steuereinheit konfiguriert ist, um in einem zweiten Modus (510) betrieben zu werden, wobei jeder Steuerschalter der Vielzahl von Steuerschaltern mit einer individuellen Steuerung mindestens einer Eigenschaft des emittierten Lichts verknüpft ist.

2. Beleuchtungssystem nach Anspruch 1, wobei die Steuereinheit konfiguriert ist, um, nach Betätigung der Steuereinheit durch den Benutzer in dem ersten Modus, in dem zweiten Modus betrieben zu werden.

3. Beleuchtungssystem nach Anspruch 1 oder 2, wobei die Eingangsschnittstelle konfiguriert ist, um die Intensität des Umgebungslichts basierend auf einer aktuellen Lichteinstellung der mindestens einen Lichtquelle zu bestimmen.

4. Beleuchtungssystem nach einem der vorstehenden Ansprüche, wobei, in dem ersten Modus, jeder Steuerschalter der Vielzahl von Steuerschaltern konfiguriert ist, um die mindestens eine Lichtquelle der mindestens einen Lichtquelle gemäß mindestens einer von
einer vorherigen Einstellung der mindestens einen Lichtquelle, und
einer Einstellung der mindestens einen Lichtquelle basierend auf der Tageszeit bei Betätigung der Steuereinheit durch den Benutzer einzuschalten.

5. Beleuchtungssystem nach einem der vorstehenden Ansprüche, ferner umfassend mindestens einen Sensor (600), der mit der Eingangsschnittstelle verbunden und konfiguriert ist, um ein Lichtintensitätssignal, das mit dem Umgebungslicht verknüpft ist, zu erzeugen, wobei die Eingangsschnittstelle konfiguriert ist, um die Intensität des Umgebungslichts basierend auf dem Lichtintensitätssignal, das von dem mindestens einen Sensor empfangen wird, zu bestimmen.

6. Beleuchtungssystem nach Anspruch 5, wobei die Eingangsschnittstelle mit der Steuereinheit verbunden ist und konfiguriert ist, um Informationen, die mit der Intensität des Umgebungslichts verknüpft sind, gemäß einer ersten zuvor bestimmten Zeitintervalleinstellung an die Steuereinheit zu senden.

7. Beleuchtungssystem nach Anspruch 5, wobei die Eingangsschnittstelle mit der Steuereinheit verbunden ist und konfiguriert ist, um Informationen, die mit der Intensität des Umgebungslichts verknüpft sind, bei Anforderung durch die Steuereinheit an die Steuereinheit zu senden.

8. Beleuchtungssystem nach Anspruch 7, wobei die Steuereinheit konfiguriert ist, um die Informationen anzufordern basierend auf mindestens einem von
einer zweiten zuvor bestimmten Zeitintervalleinstellung,
dem Lichtintensitätssignal, das eine zuvor bestimmte Schwelle überschreitet,
einer Tageszeit und
Informationen, die mit der Intensität des Umgebungslichts verknüpft sind, die zuvor an die Steuereinheit gesendet wurden.

9. Beleuchtungssystem nach einem der Ansprüche 5 bis 8, wobei der mindestens eine Sensor mindestens eine Kamera, die konfiguriert ist, um die Intensität des Umgebungslichts zu erfassen, umfasst.

10. Beleuchtungssystem nach einem der vorstehenden Ansprüche, wobei mindestens zwei von
der Steuereinheit,
der Eingangsschnittstelle und
der mindestens einen Lichtquelle
in einer einzigen Entität integriert sind.

11. Beleuchtungssystem nach einem der vorstehenden Ansprüche, wobei die Steuereinheit konfiguriert ist, um das zweite Lichtintensitätsniveau einzustellen.

12. Beleuchtungssystem nach einem der vorstehenden Ansprüche, wobei die Eingangsschnittstelle mit der Steuereinheit verbunden ist, und wobei die Steuereinheit konfiguriert ist, um eine Vielzahl von Niveaus der Intensität des Umgebungslichts in Abhängigkeit von Zeit von der Eingangsschnittstelle zu empfangen und um das zweite Lichtintensitätsniveau basierend auf der empfangenen Vielzahl von Niveaus der Intensität des Umgebungslichts einzustellen.

13. Beleuchtungssystem nach einem der vorstehenden Ansprüche, wobei die Steuereinheit ein Mehrfachtastenschalter ist, und wobei die Vielzahl von Lichtsteuerschaltern einen Ein-/Aus-Steuerschalter (300a) umfasst.

14. Verfahren (700) zum Betreiben eines Beleuchtungssystems (100), umfassend mindestens eine Lichtquelle (110), die angeordnet ist, um Licht (115) zu emittieren, eine Eingangsschnittstelle (120), die konfiguriert ist, um die Intensität von Umgebungslicht in einem Umfeld zu bestimmen, und eine Steuereinheit (200), umfassend eine Vielzahl von Lichtsteuerschaltern (300a-d) für Betätigung durch einen Benutzer (205), wobei die Steuereinheit mit der mindestens einen Lichtquelle wirkverbunden ist, wobei das Verfahren die Schritte umfasst
Bestimmen (710) eines Niveaus der Intensität des Umgebungslichts,
Bestimmen (720), ob das bestimmte Niveau der Intensität des Umgebungslichts unter einem ersten Lichtintensitätsniveau (400) liegt, und entsprechend Einstellen (730) der Steuereinheit, um in einem ersten Modus (410) betrieben zu werden, wobei jeder Steuerschalter der Vielzahl von Steuerschaltern konfiguriert ist, um, bei Betätigung der Steuereinheit durch den Benutzer mindestens eine Lichtquelle der mindestens einen Lichtquelle einzuschalten,
**gekennzeichnet durch**
Bestimmen (740), ob das bestimmte Niveau der Intensität des Umgebungslichts über einem zweiten Lichtintensitätsniveau (500) liegt, und entsprechend Einstellen (750) der Steuereinheit, um in einem zweiten Modus (510) betrieben zu werden, wobei jeder Steuerschalter der Vielzahl von Steuerschaltern mit einer individuellen Steuerung mindestens einer Eigenschaft des emittierten Lichts verknüpft ist.

15. Computerprogrammprodukt für eine Computervorrichtung, das Computerprogrammprodukt umfassend Computerprogrammcode, um das Verfahren nach Anspruch 14 durchzuführen, wenn das Computerprogrammprodukt auf einer Verarbeitungseinheit der Computervorrichtung ausgeführt wird.

## Revendications

1. Système d'éclairage (100), comprenant
au moins une source de lumière (110) conçue pour émettre de la lumière (115),
une interface d'entrée (120) configurée pour déterminer l'intensité de la lumière ambiante (130) dans un environnement,
une unité de commande (200) située dans l'environnement, l'unité de commande comprenant une pluralité d'interrupteurs de commande de lumière (300ad) destinée à être actionnée par un utilisateur (205), dans lequel l'unité de commande est reliée fonctionnellement à l'au moins une source de lumière,
dans lequel, dans le cas où l'interface d'entrée détermine qu'un niveau de l'intensité de la lumière ambiante est inférieur à un premier niveau d'intensité lumineuse (400), l'unité de commande est configurée pour fonctionner dans un premier mode (410) dans lequel chaque interrupteur de commande de la pluralité d'interrupteurs de commande est configuré pour allumer au moins une source de lumière parmi l'au moins une source de lumière lors de l'actionnement de l'unité de commande par l'utilisateur,
**caractérisé en ce que** dans le cas où l'interface d'entrée détermine qu'un niveau de l'intensité de la lumière ambiante est supérieur à un second niveau d'intensité lumineuse (500), l'unité de commande est configurée pour fonctionner dans un second mode (510) dans lequel chaque interrupteur de commande de la pluralité d'interrupteurs de commande est associé à une commande individuelle d'au moins une propriété de la lumière émise.

2. Système d'éclairage selon la revendication 1, dans lequel l'unité de commande est configurée pour fonctionner dans le second mode après l'actionnement par l'utilisateur de l'unité de commande dans le premier mode.

3. Système d'éclairage selon la revendication 1 ou 2, dans lequel l'interface d'entrée est configurée pour déterminer l'intensité de la lumière ambiante sur la base d'un réglage de lumière actuel de l'au moins une source de lumière.

4. Système d'éclairage selon l'une quelconque des revendications précédentes, moyennant quoi dans le premier mode, chaque interrupteur de commande de la pluralité d'interrupteurs de commande est configuré pour allumer l'au moins une source de lumière parmi l'au moins une source de lumière selon au moins l'un parmi
un réglage précédent de l'au moins une source de lumière, et
un réglage de l'au moins une source de lumière basé sur l'heure de la journée, lors de l'actionnement de l'unité de commande par l'utilisateur.

5. Système d'éclairage selon l'une quelconque des revendications précédentes, comprenant en outre au moins un capteur (600) relié à l'interface d'entrée et configuré pour générer un signal d'intensité lumineuse associé à la lumière ambiante, dans lequel l'interface d'entrée est configurée pour déterminer l'intensité de la lumière ambiante sur la base du signal d'intensité lumineuse reçu à partir de l'au moins un capteur.

6. Système d'éclairage selon la revendication 5, dans lequel l'interface d'entrée est reliée à l'unité de commande et est configurée pour envoyer des informations associées à l'intensité de la lumière ambiante à l'unité de commande selon un premier réglage d'intervalle de temps prédéterminé.

7. Système d'éclairage selon la revendication 5, dans lequel l'interface d'entrée est reliée à l'unité de commande et est configurée pour envoyer des informations associées à l'intensité de la lumière ambiante à l'unité de commande sur demande de l'unité de commande.

8. Système d'éclairage selon la revendication 7, dans lequel l'unité de commande est configurée pour demander les informations sur la base d'au moins l'un parmi
un second réglage d'intervalle de temps prédéterminé,
le signal d'intensité lumineuse dépassant un seuil prédéterminé,
une heure de la journée, et
des informations associées à l'intensité de la lumière ambiante précédemment envoyées à l'unité de commande.

9. Système d'éclairage selon l'une quelconque des revendications 5 à 8, dans lequel l'au moins un capteur comprend au moins une caméra configurée pour enregistrer l'intensité de la lumière ambiante.

10. Système d'éclairage selon l'une quelconque des revendications précédentes, dans lequel au moins deux parmi
l'unité de commande,
l'interface d'entrée, et
l'au moins une source de lumière,
sont intégrés dans une seule entité.

11. Système d'éclairage selon l'une quelconque des revendications précédentes, dans lequel l'unité de commande est configurée pour régler le second niveau d'intensité lumineuse.

12. Système d'éclairage selon l'une quelconque des revendications précédentes, dans lequel l'interface d'entrée est reliée à l'unité de commande, et dans lequel l'unité de commande est configurée pour recevoir une pluralité de niveaux de l'intensité de la lumière ambiante en fonction du temps à partir de l'interface d'entrée, et pour régler le second niveau d'intensité lumineuse sur la base de la pluralité de niveaux reçus de l'intensité de la la lumière ambiante.

13. Système d'éclairage selon l'une quelconque des revendications précédentes, dans lequel l'unité de commande est un interrupteur à boutons multiples, et dans lequel la pluralité d'interrupteurs de commande d'éclairage comprend un interrupteur de commande marche/arrêt (300a).

14. Procédé (700) de fonctionnement d'un système d'éclairage (100) comprenant au moins une source de lumière (110) conçue pour émettre de la lumière (115), une interface d'entrée (120) configurée pour déterminer l'intensité d'une lumière ambiante dans un environnement, et une unité de commande (200) comprenant une pluralité d'interrupteurs de commande de lumière (300a-d) destinée à être actionnée par un utilisateur (205), dans lequel l'unité de commande est reliée fonctionnellement à l'au moins une source de lumière, dans lequel le procédé comprend les étapes consistant à
déterminer (710) un niveau de l'intensité de la lumière ambiante,
déterminer (720) si le niveau déterminé de l'intensité de la lumière ambiante est inférieur à un premier niveau d'intensité lumineuse (400), et régler (730) en conséquence l'unité de commande pour qu'elle fonctionne dans un premier mode (410) dans lequel chaque interrupteur de commande de la pluralité d'interrupteurs de commande est configuré pour allumer au moins une source de lumière parmi l'au moins une source de lumière lors de l'actionnement de l'unité de commande par l'utilisateur, **caractérisé par**
le fait de déterminer (740) si le niveau déterminé de l'intensité de la lumière ambiante est supérieur à un second niveau d'intensité lumineuse (500), et régler (750) en conséquence l'unité de commande pour qu'elle fonctionne dans un second mode (510) dans lequel chaque interrupteur de commande de la pluralité d'interrupteurs de commande est associé à une commande individuelle d'au moins une propriété de la lumière émise.

15. Produit-programme d'ordinateur pour un dispositif informatique, le produit-programme d'ordinateur comprenant un code de programme informatique pour effectuer le procédé selon la revendication 14 lorsque le produit-programme d'ordinateur est exécuté sur une unité de traitement du dispositif informatique.
